# EUROPEAN PATENT APPLICATION

(11) **EP 3 354 489 A1**
(43) Date of publication of application: **01.08.2018**
(21) Application number: 16848669.4
(22) Date of filing: 23.09.2016
(51) Int. Cl.: B60C 23/02, B60B 35/02, B60C 23/04, F16C 19/18, H02K 5/173, H02K 7/08

(54) **ROLLING BEARING UNIT FOR SUPPORTING WHEEL**

(30) Priority: 24.09.2015 JP 2015186307; 12.01.2016 JP 2016003297; 22.01.2016 JP 2016010636
(71) Applicant: NSK Ltd., Tokyo 141-8560 (JP)
(72) Inventor: MATSUDA, Yasuyuki, Fujisawa-shi Kanagawa 251-8501 (JP); HIKIDA, Masafumi, Fujisawa-shi Kanagawa 251-8501 (JP); TAKEHARA, Tetsu, Fujisawa-shi Kanagawa 251-8501 (JP); KAWAHARA, Hiroshi, Fujisawa-shi Kanagawa 251-8501 (JP); MORITA, Ryuho, Fujisawa-shi Kanagawa 251-8501 (JP); YAMAMOTO, Shin, Fujisawa-shi Kanagawa 251-8501 (JP)
(74) Representative: Grünecker Patent- und Rechtsanwälte PartG mbB
(86) International application number: PCT/JP2016/078039
(87) International publication number: WO 2017/051881

(57) **Abstract**

The provided ball bearing unit for supporting a wheel is equipped with: a bearing unit which has an outer race member, an inner race member, and multiple rolling bodies disposed therebetween in a freely rollable manner, wherein one of the outer race member and the inner race member is a stationary-side race member which does not rotate when in use, and the other is a rotating-side race member which rotates with the wheel; a power generator having a stator and a rotor, and generating electric power to be supplied to a sensor disposed on the wheel on the basis of relative rotation of the stator and the rotor; a battery for storing the electric power generated by the power generator; and a radio communication unit for radio communication of signals, including an output signal of the sensor, with an electronic device disposed on the vehicle side. The stator is supported on and fixed to the stationary-side race member, and the rotor, the battery, and the radio communication unit are supported on and fixed to the rotating-side race member.

## Description

### Technical Field

The present invention relates to an improvement of a vehicle wheel supporting rolling bearing unit used for a suspension device rotatably supporting a vehicle wheel of an automobile.

### Background Art

There are many factors which influence motion performance and safety performance of an automobile, but what ultimately determines behavior of the automobile such as running, turning and stopping is friction force (grip force, tire force) between a tire configuring a vehicle wheel and a road surface. For this reason, in recent years, it has been considered to detect a state quantity of the tire represented by the friction force acting on the tire and use it for the active safety technology or the like. For example, there are considered technologies for measuring air pressure in the tire and for obtaining a load acting on the tire directly or indirectly by detecting distortion of the tire, or the like (refer to Patent Document 1).

When various sensors such as an air pressure sensor and a strain sensor are provided on the tire, it is necessary to supply electric power to the various sensors. In view of such circumstances, for example, Patent Documents 2 and 3 disclose a technology of providing a power generation device in a tire and supplying electric power generated by the power generation device to an electronic equipment such as a sensor. However, in a case where the power generation device is provided on the tire (and a wheel), since all components of the tire (and the wheel) rotate and do not have a non-rotating portion, it is necessary to additionally provide a mechanism which relatively displaces using rotary motion of the vehicle wheel so as to configure the power generation device. Therefore, a structure of the power generation device tends to be complicated, which causes an increase in costs. Further, since the tire needs to be replaced regularly, it is necessary to re-attach the sensor, the power generation device or the like to the tire after replacement, and the cost is also likely to increase.

On the other hand, for example, Patent Document 4 discloses a technology of obtaining friction force acting on a tire by installing a load sensor in a rolling bearing unit for a suspension device rotatably supporting a vehicle wheel. According to this technology, although the above-described problem at regular replacement of the tire does not occur, there is a possibility that following problems are caused.

Firstly, in a state where brake (braking force) is operating, a load detected by a load sensor provided in the rolling bearing unit does not coincide with force actually acting on the tire, and there is a possibility that friction force cannot be accurately obtained. The reason for this is that in a state where the brake is operating, there are two paths through which the force acting on the tire is transmitted to a vehicle body. One is "Tire -> Rolling Bearing Unit -> Vehicle Body", and the other is "Tire -> Brake Device -> Vehicle Body". The load sensor provided in the rolling bearing unit can only detect a load transmitted through the former path.

Secondly, in a structure described in Patent Document 4, it is necessary to connect a harness extended out from the load sensor to a calculator provided at a vehicle body side, and therefore, handling workability of the harness at the time of assembling the rolling bearing unit to the vehicle body is troublesome, and assembly work is increased, which causes an increase in assembly cost.

### Prior Art Document

### Patent Document

Patent Document 1: JP-A-2013-107460
Patent Document 2: JP4627108B
Patent Document 3: JP5508124B
Patent Document 4: JP-A-2005-43336

### Summary of the Invention

### Problem to be Solved by the Invention

In view of the above circumstances, according to an aspect of the present invention provides a structure capable of accurately detecting a state quantity of a tire at low cost regardless of an operating state of a brake.

### Means for Solving the Problems

A vehicle wheel supporting rolling bearing unit according to an embodiment of the present invention rotatably supports a vehicle wheel (a tire and a wheel) by a suspension device, and includes a bearing part, an electric generator, a battery, and a wireless communication device.

The bearing part includes an outer diameter side bearing ring member, an inner diameter side bearing ring member, and a plurality of rolling elements.

The outer diameter side bearing ring member is configured, for example, in a substantially annular shape (a cylindrical shape), and has one or more (for example, double rows) outer ring raceways on an inner peripheral surface.

The inner diameter side bearing ring member is configured, for example, in a substantially annular shape (a cylindrical shape), is arranged at a radially inner side of the outer diameter side bearing ring member, and has one or more (for example, double rows) inner ring raceways on an outer peripheral surface.

Balls or rollers (including tapered rollers, cylindrical rollers, needle rollers and spherical rollers), for example, can be used for the rolling elements, and the rolling elements are rollably provided between the outer ring raceway and the inner ring raceway.

In a use state, one bearing ring member of the outer diameter side bearing ring member and the inner diameter side bearing ring member is a stationary side bearing ring member which is supported and fixed to the suspension device and is non-rotatable, and the other bearing ring member is a rotation side bearing ring member which is coupled and fixed to the vehicle wheel and is configured to rotate together with the vehicle wheel.

The electric generator includes a stator and a rotor concentrically (coaxially) arranged with each other, and is configured to generate electric power to be supplied to a sensor (a sensor which measures a state quantity of the vehicle wheel, such as a strain sensor, an acceleration sensor, an air pressure sensor, a wear sensor and a temperature sensor) provided on the vehicle wheel based on relative rotation between the stator and the rotor.

The battery is configured to store electric power generated by the electric generator and supply the electric power to the sensor when a power generation amount of the electric generator decreases.

The wireless communication device is configured to wirelessly communicate a signal including an output signal of the sensor (for example, a signal representing a traveling state of a vehicle, an operating state of an engine or the like transmitted from a vehicle body side, as necessary) with an electronic equipment arranged at a vehicle body side.

The stator is supported and fixed directly or indirectly to the stationary side bearing ring member, and the rotor, the battery and the wireless communication device are supported and fixed directly or indirectly to the rotation side bearing ring member.

Incidentally, from the viewpoint of reducing the cost at the time of tire replacement, it is preferable to provide, among the above-mentioned sensors, only a sensor configured to measure a state quantity which cannot be measured unless the sensor is provided in the tire such as a wear sensor, a tire distortion sensor and a temperature sensor on the tire, and provide a sensor configured to measure a state quantity which can be measured without providing the sensor in the tire such as an air pressure sensor, a wheel distortion sensor and an acceleration sensor, on the wheel.

In the above configuration, a sensor connector configured to be used for electrically connecting with the sensor may be arranged at a portion which is inserted into a center hole of a wheel configuring the vehicle wheel in a state where the wheel is coupled and fixed to the rotation side bearing ring member. In this case, the sensor and the sensor connector can be connected by wiring (cable). The sensor connector is electrically connected to the battery and the wireless communication device.

In the above configuration, an axially inner end opening part of the stationary side bearing ring member may be closed by a cover. A portion of the cover which faces an antenna configuring the wireless communication device may be formed of radio wave transmissive resin (including fiber reinforced resin) such as ABS resin (acrylonitrile, butadiene, styrene copolymerized synthetic resin) or AS resin (acrylonitrile, styrene copolymer (copolymerization compound)).

In the above configuration, the electric generator may include a stator and a rotor each having a substantially circular ring shape. The stator and the rotor may be arranged to face each other via an axial air gap (an axial gap), that is, the electric generator may be an axial gap type electric generator.

In the above configuration, for example, the stator may include a plurality of permanent magnets arranged in a circumferential direction, and the rotor may include a plurality of coils arranged in a circumferential direction.

For example, the inside of the plurality of coils configuring the rotor may be hollow (without arranging an iron core or a core), that is, the electric generator may have a coreless structure.

Further, for example, the electric generator may be a single-phase electric generator in which a number of the coils configuring the rotor coincides with a number of poles of the permanent magnets configuring the stator.

Alternatively, the electric generator may be a radial gap type electric generator by arranging the stator and the rotor via a radial air gap (a radial gap).

In the above configuration, a charger may be provided to supply the electric power generated by the electric generator to the battery to charge the battery.

The charger may include a rectifier circuit configured to convert an AC voltage generated by the electric generator into a DC voltage. Further, such a charger (circuit) may be provided in the same space as the wireless communication device, or may be provided separately from the wireless communication device.

In the above configuration, a through hole may be formed at a center portion of the inner diameter side bearing ring member (the inner diameter side bearing ring member is formed into a hollow cylindrical shape as a whole). Further, at least one member of the electric generator, the battery, and the wireless communication device may be arranged in the through hole.

In the above configuration, for example, the stator may be fixed directly or indirectly to an axially inner end portion of the stationary side bearing ring member. A mounting member fixed to the rotation side bearing ring member is arranged at a radially inner side of the stator with the wireless communication device accommodated therein, and the rotor may be fixed around the mounting member.

Further, in the above configuration, the electric generator may also have a function as a rotational speed detection sensor.

In the above configuration, an inner ring rotation type structure may be adopted in which the inner diameter side bearing ring member is the rotation side bearing ring member and the outer diameter side bearing ring member is the stationary side bearing ring member among the outer diameter side bearing ring member and the inner diameter side bearing ring member. On the contrary, an outer ring rotation type structure may also be adopted in which the inner diameter side bearing ring member is the stationary side bearing ring member, and the outer diameter side bearing ring member is the rotation side bearing ring member.

Further, the bearing unit may adopt either a structure for a driven wheel or a structure for a driving wheel, and from the viewpoint of securing an accommodation space for the battery or the like, it may be preferable to adopt the structure for a driven wheel. Incidentally, in the case of adopting the inner ring rotating type structure for a driving wheel, a drive shaft needs to be inserted in an engagement hole (a through hole) formed at the center portion of the inner diameter side bearing ring member, and therefore, for example, the battery may be provided in a space axially outward than the axially outer end portion (tip end portion) of the drive shaft, and the electric generator may be provided around the drive shaft.

In the above configuration, an axial positioning part having a circular ring shape, for example, configured to position the battery in an axial direction, and an radial positioning part having a cylindrical surface shape for example, configured to position the battery in a radial direction may be provided on the rotation side bearing ring member separately. The battery may be supported and fixed in a state where the battery is positioned in the axial direction and the radial direction with respect to the rotation side bearing ring member.

In the above configuration, an inward flange part may be provided on an inner peripheral surface of the rotation side bearing ring member formed in a hollow cylindrical shape to protrude inward in a radial direction. An axial side surface of the inward flange part may function as the axial positioning part and an inner peripheral surface thereof may function as the radial positioning part.

Specifically, for example, when the battery is accommodated in a hollow cylindrical battery case, a part of the battery case is axially inserted into (passes through) the inward flange part. Thus, the battery case is positioned in the radial direction by the inner peripheral surface of the inward flange part which is the radial positioning part. Further, a pull-out prevention member such as a nut, a retaining ring is fixed to a portion of the battery case axially inserted into the inward flange part. The pull-out prevention member is axially abutted against an axially inner side surface of the inward flange part which is the axial positioning part, and a part of the battery case is axially abutted against another axial positioning part provided on an inner surface of the rotation side bearing ring member. Thus, the rotation side bearing ring member is sandwiched from both sides in the axial direction between a part of the battery case and the pull-out prevention member, so that the battery case is positioned in the axial direction. As a result, the battery case can be supported and fixed in a state where the battery case is positioned in the axial direction and the radial direction with respect to the rotation side bearing ring member.

In the above configuration, a rotation restricting part such as a female serration part (groove), a female spline part (groove), or a key groove may be provided on the inner peripheral surface of the inward flange part to restrict relative rotation with the battery (battery case).

### Effect of the Invention

According to the vehicle wheel supporting rolling bearing unit configured as described above, it is possible to accurately detect a state quantity of a tire at low cost regardless of an operating state of a brake.

That is, in the above configuration, since the sensor is provided not on the bearing unit side but on the vehicle wheel (the tire and wheel) side unlike the structure described in the Patent Document 4, the detection can be accurate regardless of the operating state of the brake even when detecting force acting on the tire, for example.

The bearing unit having the above configuration includes an electric generator which generates electric power to be supplied to the sensor and a wireless communication device which wirelessly transmits an output signal of the sensor to an electronic equipment provided at the vehicle body side, and therefore, when the bearing unit is attached to the vehicle body (suspension device), handling work of the harness is not necessarily performed, and assembly workability can be improved accordingly.

Further, at the time of tire replacement, the electric generator, the battery, and the wireless communication device provided in the bearing unit can be continuously used as they are (it will be sufficient to replace only the sensor provided on the tire), so that the cost of replacing the tire can be reduced.

Furthermore, in the above configuration, even when tire rotation (change of tire position) is performed to prevent uneven wear, since there is no change in an attachment position of the bearing unit itself having a wireless communication function, a problem in determining from which tire a signal is received by the electronic equipment (receiver) at the vehicle body side can be prevented.

### Brief Description of Drawings

FIG. 1 is a front view showing a vehicle wheel supporting structure in which a vehicle wheel is supported to a suspension device by a vehicle wheel supporting rolling bearing unit according to a first embodiment of the present invention.
FIG. 2 is a perspective view of the vehicle wheel supporting structure as seen from an outer side in the axial direction.
FIG. 3 is a perspective view of the vehicle wheel supporting structure as seen from an inner side in the axial direction.
FIG. 4 is a sectional view of the vehicle wheel supporting structure taken along line A-A of FIG. 1.
FIG. 5 is an enlarged view of a part B of FIG. 4.
FIG. 6 is a perspective view showing the bearing unit which is taken out from the vehicle wheel supporting structure as seen from the outer side in the axial direction.
FIG. 7 is a perspective view showing the bearing unit which is taken out from the vehicle wheel supporting structure as seen from the inner side in the axial direction.
FIG. 8 is an exploded perspective view of the bearing unit.
FIG. 9 is a view showing a second embodiment of the present invention and corresponding to FIG. 8.
FIG. 10 is a perspective view showing only a bearing part and a battery case taken out in the second embodiment.
FIG. 11 is a front view showing a vehicle wheel supporting rolling bearing unit according to a third embodiment of the present invention as seen from the outer side in the axial direction.
FIG. 12 is a sectional view of the vehicle wheel supporting rolling bearing unit taken along line C-C of FIG. 11.
FIG. 13 is a view showing a fourth embodiment of the present invention and corresponding to FIG. 12.
FIG. 14 is a view showing a bearing unit with a part of members omitted and corresponding to FIG. 8.

### Description of Embodiments

### [First Embodiment]

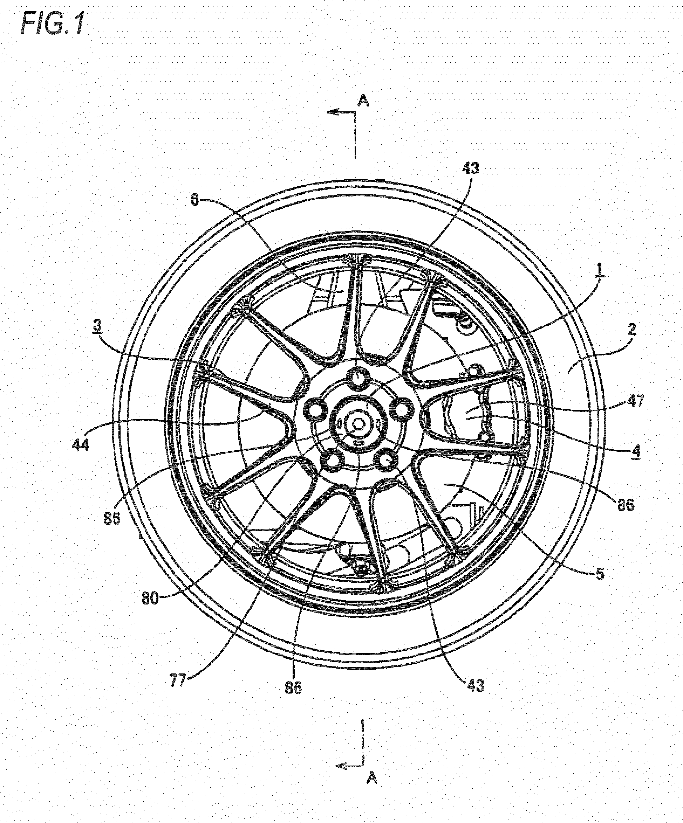

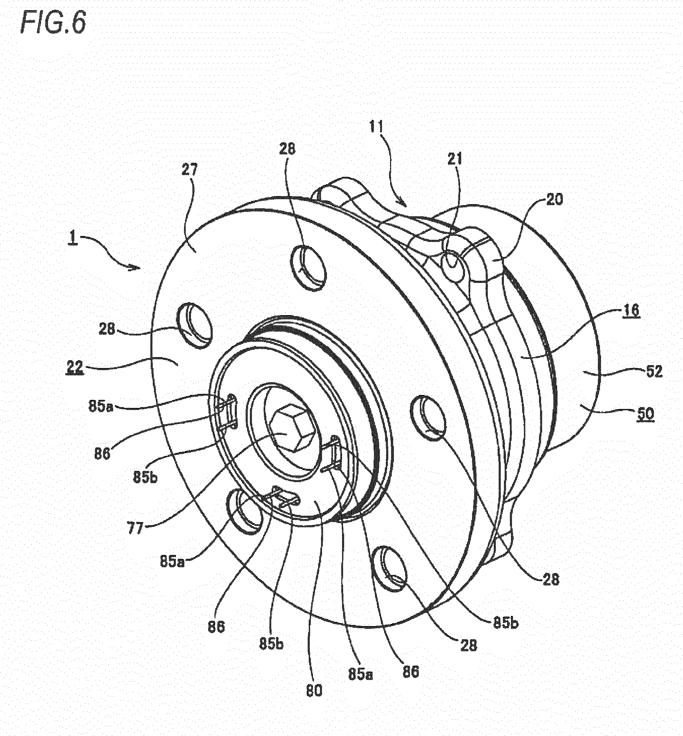

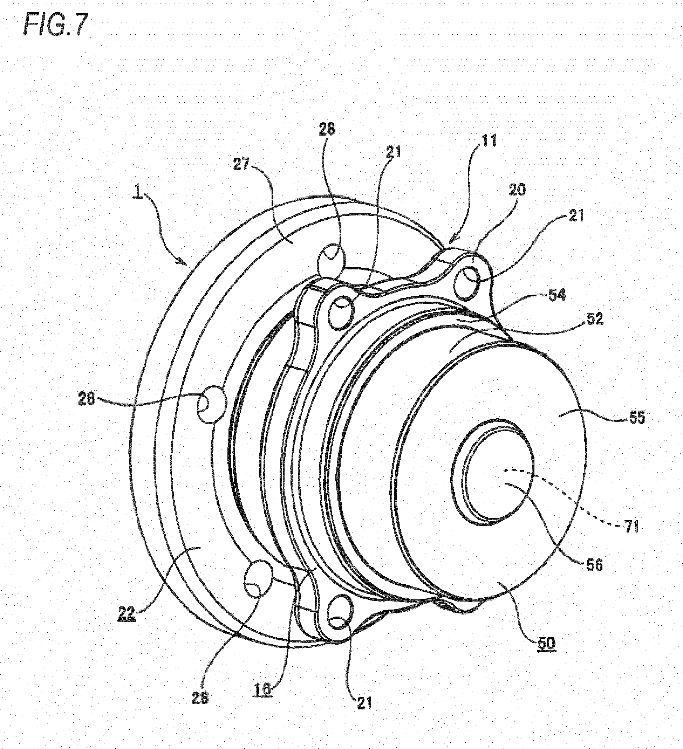

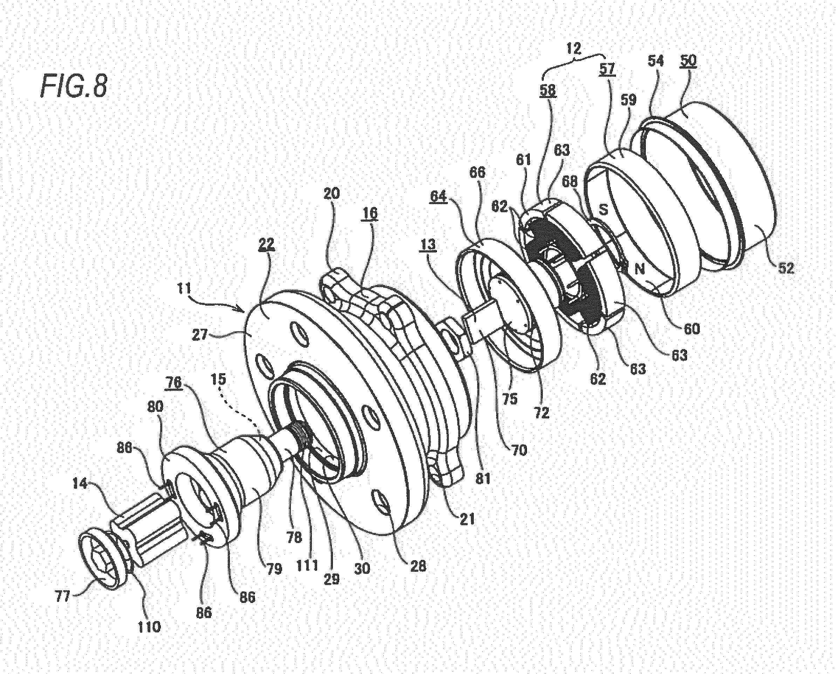

A first embodiment of the present invention will be described with reference to FIGS. 1 to 8. A vehicle wheel supporting rolling bearing unit (hereinafter, referred to as "bearing unit") 1 according to the present embodiment is used for a driven wheel, and rotatably supports a tire 2 and a wheel 3 configuring a vehicle wheel of an automobile, and a brake rotor 5 configuring a disc brake device 4 which is a braking device with respect to a knuckle 6 configuring a suspension device. In the illustrated structure, the knuckle 6 is supported by an upper arm 8 and a lower arm 9 which are supported to a vehicle body 7 in a pivotably displaceable manner.

The bearing unit 1 includes a bearing part 11 having a bearing function, an electric generator 12 having a power generation function, a wireless communication device 13 having a wireless communication function, a battery 14 having an electric power storage function, and a charger 15 having a charging function.

The bearing part 11 rotatably supports the tire 2 and the wheel 3 with respect to the knuckle 6, and includes an outer ring 16 which is an outer diameter side bearing ring member, a hub 17 which is an inner diameter side bearing ring member, and a plurality of balls 18, 18.

The outer ring 16 is formed in a substantially annular shape as a whole, and has double-row outer ring raceways 19a, 19b on an inner peripheral surface and a stationary side flange 20 at an inner end side portion of an axially intermediate portion on an outer peripheral surface. The stationary side flange 20 is provided with a plurality of attachment holes (screw holes or through holes) 21, 21 penetrating in an axial direction.

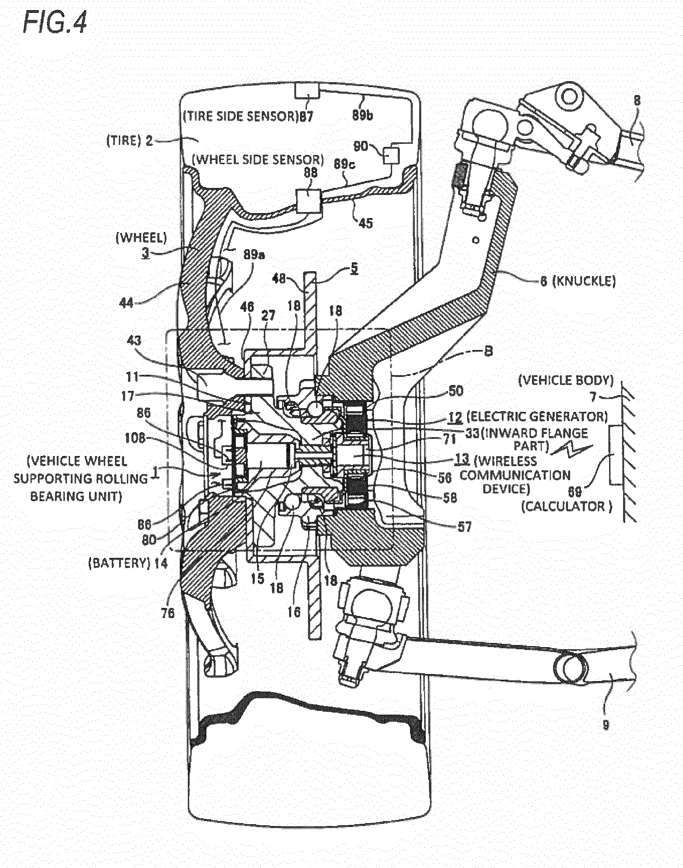

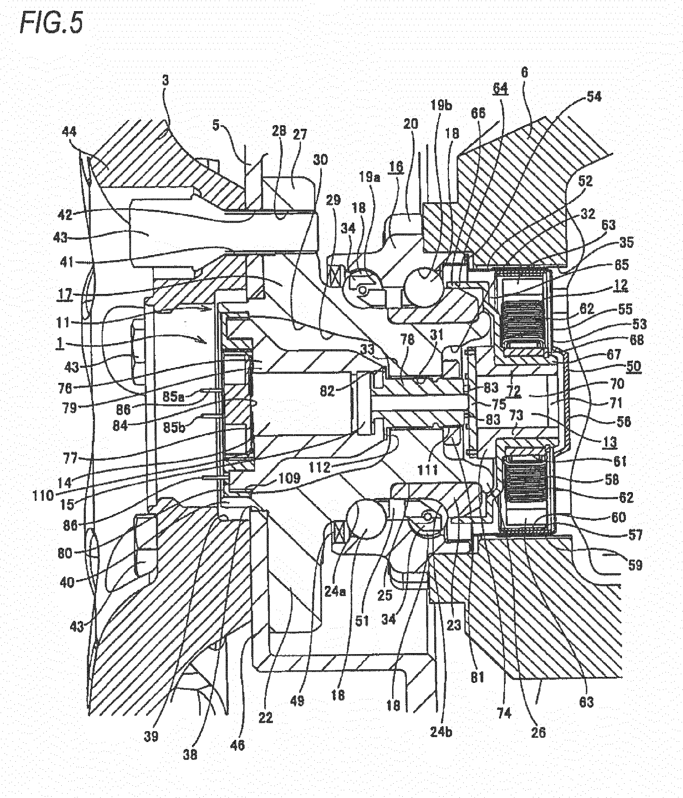

Incidentally, in the present specification and claims, "inward" with respect to the axial direction refers to a right side in FIGS. 4 and 5, which is a center side in a width direction of a vehicle when being assembled to the vehicle. On the contrary, a left side in FIG. 4 and 5, which is at an outer side in the width direction of the vehicle, is referred to as "outward" with respect to the axial direction.

The hub 17 is formed by combining a hub body 22 and an inner ring 23, has double-row inner ring raceways 24a, 24b on an outer peripheral surface, and is supported concentrically with the outer ring 16 on an inner diameter side of the outer ring 16. Specifically, the inner ring raceway 24a at an outer side in the axial direction is formed directly at an axially intermediate portion of an outer peripheral surface of the hub body 22, and the inner ring 23 formed with the inner ring raceway 24b at an inner side in the axial direction on an outer peripheral surface thereof is externally fitted and fixed to a small-diameter step portion 25 similarly formed at an axially inner end side portion. An axially inner end surface of the inner ring 23 is pressed by a crimping part 26 formed by plastically deforming an axially inner end portion of the hub body 22 radially outward. Further, a rotation side flange 27 for supporting the vehicle wheel is provided at a portion on an axially outer end portion of the hub body 22 which protrudes axially outward than an axially outer end opening part of the outer ring 16. Furthermore, coupling holes (screw holes or through holes) 28, 28 penetrating in the axial direction are provided on the rotation side flange 27.

Incidentally, when implementing the present invention, a male screw part may be formed on a portion of the hub body which protrudes axially inward than a portion to which the inner ring is externally fitted and fixed to, and the inner ring may be supported and fixed to the hub body by screwing a nut into the male screw part and tightening it further.

Particularly, in the present embodiment, the hub body 22 is formed in a hollow cylindrical shape, and a through hole (center hole) 29 penetrating in the axial direction is provided at a center portion of the hub body 22. The through hole 29 is configured by an outer end side large-diameter portion 30 provided from an axially outer end portion to an intermediate portion, a small-diameter portion 31 provided at an inner end side portion of the axially intermediate portion, and an inner end side large-diameter portion 32 provided at an axially inner end portion. In the present embodiment, a circular ring shaped inward flange part 33 protruding radially inward than a portion adjacent to both axial sides is formed over an entire circumference of an inner peripheral surface of an inner end side portion of an axially intermediate portion of the hub body 22, so that the center hole 29 is divided into the outer end side large-diameter portion 30, the small-diameter portion 31, and the inner end side large-diameter portion 32. Further, the outer end side large-diameter portion 30 is formed in a substantially trapezoidal cross section in which an inner diameter dimension gradually increases toward an axially outward direction, while the inner end side large-diameter portion 32 is formed in a substantially trapezoidal cross section in which an inner diameter dimension gradually increases toward an axially inward direction.

In the present embodiment, the outer end side large-diameter portion 30 and the inner end side large-diameter portion 32 of the through hole 29 are formed when the hub body 22 is manufactured by forging, which is a plastic working, while the small-diameter portion 31 configured by an inner peripheral surface of the inward flange part 33 is formed by cutting (drilling). Therefore, coaxiality between a center axis of the cylindrical surface shaped small-diameter portion 31 (corresponding to the radial positioning part described in the claims) and a center axis of the hub body 22 is increased. Further, an axially inner side surface (both axial side surfaces as necessary) of the circular ring shaped inward flange part 33 (corresponding to the axial positioning part (seating surface) described in the claims) is subjected to cutting or grinding (seating surface machining), so as to increase parallelism with respect to a virtual plane orthogonal to the center axis of the hub body 22. Furthermore, in the present embodiment, as described later, the battery 14, the charger 15, and a part of the wireless communication device 13 (axially outer end portion) are arranged in the through hole 29.

While being held by cages 34, 34 respectively for each of the two rows, the balls 18, 18 are rollably provided between the outer ring raceways 19a, 19b and the inner ring raceways 24a, 24b in a state where a preload is applied with a contact angle of a back to back arrangement type. In the illustrated example, diameters, pitch circle diameters, and contact angles are set to be equal with each other between both rows of the balls 18, 18. However, when implementing the present invention, the diameters of both rows of the balls are not necessarily the same. For example, by making the diameter of the balls configuring a ball row on an inner side (axially inner side) larger than that of the balls configuring a ball row on an outer side (axially outer side), and the pitch circle diameter of the ball row on the outer side larger than that of the ball row on the inner side, it is also possible to secure a larger volume of a space of the outer end side large-diameter portion (increase a capacity of a battery to be accommodated therein).

In order to support and fix the outer ring 16 to the knuckle 6, a portion (a knuckle side pilot part) of the outer ring 16 provided axially inward than the stationary side flange 20 is inserted into a circular support hole 35 formed in the knuckle 6, and an axially inner side surface of the stationary side flange 20 is abutted against an axially outer end surface of the knuckle 6. In this state, coupling members (bolts) 37, 37 are respectively screwed into or inserted through a plurality of knuckle side attachment holes (through holes or screw holes) 36, 36 provided on the knuckle 6 and the attachment holes 21, 21 which are provided at positions aligned with each other, and further tightened up. Thereby, the outer ring 16 is supported and fixed to the knuckle 6. That is, in the present embodiment, the outer ring 16 corresponds to the stationary side bearing ring member described in the claims.

On the other hand, the wheel 3 configuring the vehicle wheel and the brake rotor 5 are coupled and fixed to the rotation side flange 27. For this reason, a positioning cylinder part 40 called a pilot part provided at the axially outer end portion of the hub body 22 is successively inserted (internally fitted) into a rotor center hole 38 provided at a center portion of the brake rotor 5 and a wheel center hole 39 provided at a center portion of the wheel 3. Therefore, in a state where the wheel 3 and the brake rotor 5 are positioned in the radial direction, coupling members 43, 43 are respectively screwed into or inserted through the coupling holes 28, 28, wheel coupling holes 41, 41 formed on the wheel 3, and a rotor coupling hole 42 formed on the brake rotor 5 which are provided at positions aligned together, and further tightened up. As a result, the wheel 3 and the brake rotor 5 are coupled and fixed to an axially outer side surface of the rotation side flange 27. That is, in the present embodiment, the hub 17 corresponds to the rotation side bearing ring member described in the claims.

The wheel 3 is formed of an aluminum alloy in the illustrated example, and includes a disc part 44 coupled and fixed to the axially outer side surface of the rotation side flange 27 and a cylindrical rim part 45 provided on an outer peripheral edge portion of the disc part 44. The tire 2 is supported and fixed around the rim part 45. On the other hand, the brake rotor 5 has a crank shaped cross section, and is formed in a circular ring plate shape as a whole. Further, the brake rotor 5 includes a hat part 46 provided at an inner diameter side portion and coupled and fixed to the axially outer side surface of the rotation side flange 27, and a sliding part 48 provided at an outer diameter side portion and clamped by a pair of pads supported on a caliper 47 configuring the disc brake device 4 during braking operation.

In the bearing unit 1 of the present embodiment, a seal ring 49 is provided between the axially outer end opening part of the outer ring 16 and an outer peripheral surface of the axially intermediate portion of the hub body 22, and a bottomed cylindrical cover 50 is mounted to an axially inner end opening part of the outer ring 16. Thereby, grease sealed in an internal space 51 where the balls 18, 18 are provided is prevented from leaking into an external space, and foreign matters in the external space are prevented from entering the internal space 51.

The cover 50 includes a cylindrical shaped cylinder portion 52 and a disk-like bottom portion 53, in which an axially outer end portion of the cylinder portion 52 is internally fitted and fixed to an inner peripheral surface of an axially inner end portion of the outer ring 16. Further, an outward collar part (bent part) 54 provided at an axially outer end side portion of the cylinder portion 52 is abutted against an axially inner end surface of the outer ring 16, so that the cover 50 is positioned in the axial direction. Furthermore, the bottom portion 53 is configured by an outer diameter side circular ring portion 55 provided to be bent at a right angle in a radially inward direction from an axially inner end portion of the cylinder portion 52, and a center circular plate portion 56 provided at a center portion of the bottom portion 53 and at a radially inner side of the outer diameter side circular ring portion 55. In the present embodiment, the cylinder portion 52 and the outer diameter side circular ring portion 55 are integrally formed by press working on a metal plate such as a stainless steel sheet, and the center circular plate portion 56 is formed of resin with excellent radio wave transmissibility such as ABS resin or AS resin. In the illustrated structure, the center circular plate portion 56 has a substantially U-shaped cross section, and configured to protrude axially inward than the outer diameter side circular ring portion 55 in a state where an outer peripheral edge portion of the center circular plate portion 56 is coupled and fixed to an inner peripheral edge portion of the outer diameter side circular ring portion 55.

In the present embodiment, the bearing unit 1 is configured by assembling the electric generator 12, the wireless communication device 13, the battery 14, and the charger 15 to the bearing part 11 having the above-described configuration.

The electric generator 12 is a magnet type alternating current electric generator which generates three-phase alternating current electric power to be supplied to sensors provided on the vehicle wheel side (sensors 87, 88 on a tire side and a wheel side respectively) described later, and includes a stator 57 and a rotor 58 concentrically arranged with each other. Incidentally, when implementing the present invention, it is also possible to use an alternating current electric generator which generates single phase alternating current electric power.

The stator 57 includes a support ring 59 formed in a cylindrical shape by a magnetic metal plate, and a permanent magnet 60 supported and fixed to an inner peripheral surface of the support ring 59. The permanent magnet 60 is formed in a cylindrical shape and magnetized in the radial direction, in which magnetization directions thereof are changed alternately at equal intervals in a circumferential direction. Therefore, S poles and N poles are alternately arranged at equal intervals on an inner peripheral surface of the permanent magnet 60. In the present embodiment, a total of three combinations of S pole and N pole (six poles) are provided on the inner peripheral face of the permanent magnet 60. Further, the support ring 59 is coupled and fixed to an inner peripheral surface of the axially inner end portion of the cylinder portion 52 configuring the cover 50.

On the other hand, the rotor 58 includes a stator core 61 formed by laminating a plurality of electromagnetic steel sheets, and coils 62, 62. The coils 62, 62 are wound around a plurality of (six in the illustrated example) radially arranged teeth (salient poles) 63, 63 configuring the stator core 61. Specifically, each coil 62, 62 is configured as a three-phase winding in which an enamel wire as a conductive wire is wound around each of the teeth 63, 63.

In the present embodiment, the stator core 61 configuring the rotor 58 is supported and fixed to an axially inner end portion of the hub 17 by using a mounting member 64 having a crank shaped cross section and formed in a substantially annular shape as a whole. Specifically, the mounting member 64 includes a circular plate portion 65, a large-diameter cylinder portion 66 provided to be bent in an axially outer side direction from an outer diameter side end portion of the circular plate portion 65, and a small-diameter cylinder portion 67 provided to be bent in an axially inner side direction from an inner diameter side end portion of the circular plate portion 65. The stator core 61 is externally fitted and fixed to the small-diameter cylinder portion 67 in a state where the large-diameter cylinder portion 66 is externally fitted and fixed to an axially inner end portion (shoulder portion) of the inner ring 23 configuring the hub 17 by interference fit. In addition, a substantially C-shaped retaining ring 68 is engaged with a portion of the small-diameter cylinder portion 67 protruding axially inward from a portion where the stator core 61 is externally fitted, so as to prevent the rotor 58 from falling off from the mounting member 64 in the axial direction.

In the present embodiment, the stator 57 and the rotor 58 are arranged concentrically (coaxially) in a state where the stator 57 is coupled and fixed to an inner peripheral surface of the cylinder portion 52 configuring the cover 50, and the rotor 58 is supported and fixed to the inner ring 23 via the mounting member 64, and an outer peripheral surface of the rotor 58 (teeth 63, 63) faces the inner peripheral surface of the permanent magnet 60 configuring the stator 57 in the radial direction via a minute clearance. That is, in the present embodiment, the electric generator 12 is a radial gap type electric generator. By adopting such a configuration, when the rotor 58 rotates together with the hub 17, electromotive force is generated by an electromagnetic induction action of the coils 62, 62. In other words, by rotating the hub 17 together with the vehicle wheel, the electric generator 12 generates electric power.

The wireless communication device 13 performs wireless communication (both transmission and reception are possible in the present example) with a calculator 69 which is an electronic equipment provided on a vehicle body 7 side, and includes a wireless communication circuit (substrate) 70 and an antenna 71. The wireless communication device 13 is arranged at a radially inner side of the small-diameter cylinder portion 67 configuring the mounting member 64 in a state of being fixed in a case 72 by resin molding. In the present embodiment, the case 72 is formed in a stepped cylindrical shape, and a small-diameter portion 73 provided from an axially intermediate portion to an inner end portion is internally fitted and fixed to the small-diameter cylinder portion 67 configuring the mounting member 64 from an axially outer side direction. At this time, an axially inner side surface of the large-diameter portion 74 provided at an axially outer end portion of the case 72 is abutted against an axially outer side surface of the circular plate portion 65 configuring the mounting member 64. Therefore, in the present embodiment, the wireless communication device 13 is also supported and fixed to the hub 17 (inner ring 23) using the mounting member 64.

An axially outer end opening of the case 72 is closed by a disk-like relay substrate 75 separate from the case 72. The relay substrate 75 is provided with wiring and a plurality of terminals (not shown), and electrically connected with the wireless communication circuit 70 accommodated in the case 72. Further, both ends of the coils 62, 62 configuring the electric generator 12, which are inserted through the large-diameter portion 74 configuring the case 72 in the axial direction, are connected to the wiring formed on an axially outer side surface of the relay substrate 75. On the other hand, the antenna 71 electrically connected to the wireless communication circuit 70 is arranged at an axially inner end portion of the case 72. In the present embodiment, by arranging the antenna 71 in this manner, the antenna 71 is made to adjacently face the resin-made center circular plate portion 56 configuring the cover 50. Therefore, a radio signal transmitted and received by the antenna 71 is effectively prevent from being obstructed by the cover 50, so that wireless communication can be efficiently performed between the wireless communication device 13 and the calculator 69.

The battery 14 stores electric power generated by the electric generator 12, and is configured by connecting a plurality of storage batteries (for example, nickel hydrogen batteries) in series. The charger 15 supplies electric power generated by the electric generator 12 to the battery 14 to charge the battery 14, and includes a rectifier circuit which converts an AC voltage generated by the electric generator 12 into a DC voltage, a charge/discharge control circuit which controls charging and discharging according to a remaining amount of the battery 14, and a voltage control circuit which outputs a constant voltage regardless of changes in a rotation speed of the rotor 58. In the present embodiment, in a state of being electrically connected, the battery 14 and the charger 15 having such a configuration are accommodated in the battery case 76 having an opening part at an axially outer end side and covered (sealed) by a cap 77 from the axially outer side direction. Further, an annular seal ring (for example, an O-ring) 110 is elastically sandwiched between the opening on the axially outer end side of the battery case 76 and the cap 77 to prevent foreign matters such as water and dust from entering into the battery case 76.

The battery case 76 includes a metal-made shaft-shaped connection part 78 provided at an axially inner end portion, a hollow cylindrical accommodation part 79 which is formed of synthetic resin with excellent electrical insulation, has a diameter larger than that of the connection part 78, and is provided from an axially intermediate portion to an outer end portion, and a metal-made annular connector part 80 provided to cover an entire periphery of an axially outer end portion of the accommodation part 79. In order to arrange the battery case 76 having such a configuration in the through hole 29 of the hub body 22, the connection part 78 is inserted into the through hole 29 from the axially outer side direction as a leading side. Then, the connection part 78 is inserted into (passes through) the inward flange portion 33 from the axially outer side direction toward the inside. Therefore, the connection part 78 is arranged inside the small-diameter portion 31 and the inner end side large-diameter portion 32, and the accommodation part 79 and the connector part 80 are arranged inside the outer end side large-diameter portion 30. In this state, the connector part 80 is internally fitted and fixed into the positioning cylinder part 40 configuring the hub body 22 by press fitting (internally fitted without rattling in the radial direction) or by clearance fitting. As described above, in the present embodiment, in the battery case 76, the connection part 78 (from an intermediate portion to a base end portion) is internally fitted in the inward flange part 33 (small-diameter portion 31), and the connector part 80 is internally fitted in the positioning cylinder part 40, so that the battery case 76 is positioned in the radial direction. Therefore, in the present embodiment, similarly to the inner peripheral surface of the inward flange part 33, cutting and grinding are performed on an inner peripheral surface of the cylindrical surface shaped positioning cylinder part 40 functioning as the radial positioning part described in the claims. Therefore, coaxiality between a center axis of the inner peripheral surface of the positioning cylinder part 40 and the center axis of the hub body 22 is increased.

An annular nut 81 is screwed into a portion of the connection part 78 which passes through the inside of the inward flange part 33 and protrudes into the inner end side large-diameter portion 32. For this purpose, a male screw part 111 is formed on an outer peripheral surface of a tip end portion (axially inner end portion) of the connection part 78. Then, in a state where the nut 81 is screwed with the male screw part 111, an axially outer side surface of the nut 81 is abutted against the axially inner side surface of the inward flange part 33 in the axial direction, and an axially inner end surface of a radially outer end portion of the connector part 80 is abutted against a step surface 109 provided adjacent to an axially inner side of the inner peripheral surface of the positioning cylinder part 40 in the axial direction. Thus, a part of the hub body 22 is sandwiched from both sides in the axial direction between the nut 81 and a part of the connector part 80, so that the battery case 76 is positioned in the axial direction. Therefore, in the present embodiment, similarly to the axially inner side surface of the inward flange part 33, cutting and grinding are performed on the circular ring shaped step surface 109 functioning as the axial positioning part described in the claims, so that parallelism with respect to a virtual plane orthogonal to the center axis of the hub body 22 is increased. In the present embodiment, with the above-described configuration, the battery case 76 is supported and fixed to the hub body 22 in a state where the battery case 76 is positioned in the axial direction and the radial direction. Further, in the present embodiment, the nut 81 corresponds to the pull-out prevention member described in the claims.

As described above, in the present embodiment, the case where a part of the connector part 80 is abutted against the step surface 109 has been described. As another example, a step surface 112 provided at a portion between the connection part 78 and the accommodation part 79 in the battery case 76 may also be abutted against an axially outer side surface of the inward flange part 33. When such a configuration is adopted, cutting or grinding is performed on both axial side surfaces of the inward flange part 33 functioning as the axial positioning portion (seating surface).

As described above, in a state where the battery case 76 is supported and fixed to the hub body 22, a plurality of terminals 83, 83 provided at the tip end portion (axially inner end portion) of the connection part 78 are electrically connected so as to be elastically pressed to the replay substrate 75. Specifically, springs (not shown) provided at base end portions of the terminals 83, 83 are elastically deformed in a state where the terminals 83, 83 are abutted against the relay substrate 75. Therefore, even when the position of the relay substrate 75 (or the battery case 76) in the axial direction is slightly deviated, the terminals 83, 83 can be securely connected to the relay substrate 75. The terminals 83, 83 provided on the connection part 78 respectively includes a terminal for receiving the AC voltage generated by the electric generator 12 from a relay substrate 75 side, a terminal for transmitting the voltage stored in the battery 14 to the relay substrate 75 side, and a terminal for transmitting an output signal the sensors connected to the connector part 80 (sensors 87, 88 on the tire side and the wheel side respectively) to the relay substrate 75 side. A plurality of signal lines and power lines (not shown) are arranged in the connection part 78 in a molded and insulated state, in which the power lines are connected to the charger 15 (battery 14), and the signal lines are connected to the connector part 80.

In the accommodation part 79, the charger 15 is arranged at a bottom side (axially inner side), and the battery 14 is arranged at an opening part side (axially outer side). Accordingly, in a state where the battery 14 is arranged in the accommodation part 79 and attached (screwed and fixed) with the cap 77, a pair of terminals 84 electrically connected to the charger 15 are connected to electrodes provided at both axial end portions of the battery 14. In the present embodiment, one of the terminals 84 is provided on an inner surface (axially inner side surface) of the cap 77. According to such a configuration, electric power generated by the electric generator 11 is rectified by the full-wave rectification circuit configuring the charger 15 and supplied to the sensor or the like, and the electric power is supplied to the battery 14 via the charger 15. In this case, when a power generation amount of the electric generator is insufficient to operate the sensor or the like, electric power is supplied from the battery 14 to the sensor or the like. In addition, when the power generation amount of the electric generator is sufficient to operate the sensor or the like, the battery 14 can be charged according to a request of the charger 15.

The connector part 80 is used to connect wiring (89a, 89c) for connecting one or more sensors (sensors 87, 88 on the tire side and the wheel side respectively) provided on the vehicle wheel, and the connector part 80 is positioned in (outer peripheral edge portion) the wheel center hole 39 in a state where the wheel 3 is coupled and fixed to the bearing unit 1. That is, the connector part 80 is provided at a portion located axially outermost in the bearing unit 1 of the present embodiment. Further, an outer peripheral surface of the connector part 80 may be covered with an elastic material such as rubber or synthetic resin so as to increase sealing performance (seal performance) between the outer peripheral surface of the connector portion 80 and the inner peripheral surface of the positioning cylinder part 40. The connector part 80 includes a plurality of (three in the illustrated example) sensor connectors (male connectors) 86, 86 each protruding (exposed) in the axial direction from an axially outer end surface of the battery case 76 and including a pair of pins 85a, 85b. Incidentally, types (functions and uses) of both pins 85a, 85b can be appropriately determined according to application for an analog signal, a digital signal, or the like. For example, one pin 85a can serve as a power supply pin and the other pin 85b can serve as a signal pin. In this case, one of the pins 85a is electrically connected to the battery 14, and the other pin 85b is connected to the wireless communication device 13 via the relay substrate 75 as described above.

In the present embodiment, from the viewpoint of reducing the cost at the time of tire replacement, as shown in FIG. 4, among the sensors for measuring a state quantity of the tire 2, only the tire side sensor 87 for measuring a state quantity which cannot be measured unless the sensor is provided in the tire 2 directly such as a wear sensor, a tire distortion sensor and a temperature sensor is provided in the tire 2 directly. On the other hand, the wheel side sensor 88 for measuring a state quantity which can be measured without providing the sensor in the tire 2 such as an air pressure sensor, a wheel distortion sensor and an acceleration sensor is provided on the wheel 3 (at the rim part 45 in the illustrated example). Then, the wheel side sensor 88 and one of the sensor connectors 86 are connected by wiring 89a arranged along an axially inner side surface of the disc part 44 configuring the wheel 3, and a female connector 108 provided at an end portion of the wiring 89a. On the other hand, the tire side sensor 87 is connected via a relay connector 90 attached to the wheel 3 (rim part 45). Specifically, the tire side sensor 87 and the relay connector 90 are connected by wiring 89b, and the relay connector 90 and another sensor connector 86 are connected by wiring 89c and the female connector 108. Accordingly, by separating the wiring 89b and the wiring 89c between the tire side and the wheel side, the operation at the time of tire replacement can be performed easily. Incidentally, for the remaining one sensor connector 86, although no sensor is connected, it is possible to connect a sensor as necessary. Further, when implementing the present invention, the number of sensor connectors can be increased according to the battery capacity, and the number of sensors which can be connected can be increased.

In the bearing unit 1 of the present embodiment having the above-described configuration, when the vehicle wheel (tire 2 and wheel 3) rotates with the traveling of the vehicle, the hub 17, which is the rotation side bearing ring member, of the bearing part 11 rotates. Then, the rotor 58 supported and fixed to the axially inner end portion of the hub 17 rotates relatively to the stator 57 supported and fixed to the outer ring 16 which is the stationary side bearing ring member. As a result, the electric generator 12 including the stator 57 and the rotor 58 generates electric power. Then, the AC voltage generated by the electric generator 12 is transmitted to the charger 15 in the battery case 76 through a cable (not shown) or the like. Then, after being converted into DC voltage by the charger 15, the voltage is supplied to the battery 14. The electric power stored in the battery 14 is supplied to the tire side sensor 87 provided in the tire 2 and the wheel side sensor 88 provided in the wheel 3 through the sensor connector 86 configuring the connector part 80, the female connector 108 and the wiring 89a to 89c. As a result, the tire side sensor 87 and the wheel side sensor 88 detect state quantities (for example, tire air pressure, distortion, vertical force, acceleration, temperature, or the like) of the tire 2 and the wheel 3. Further, the electric power stored in the battery 14 is also supplied to the wireless communication device 14.

Output signals of the tire side sensor 87 and the wheel side sensor 88 are transmitted to the sensor connector 86 through the wiring 89a to 89c, and then transmitted to the wireless communication device 13 via the connection part 78 and the relay substrate 75. Then, the output signals of the tire side sensor 87 and the wheel side sensor 88 are wirelessly transmitted by the antenna 71 configuring the wireless communication device 13 through the center circular plate portion 56 of the cover 50 to the calculator 69 arranged at the vehicle body 7 side. As a result, the calculator 69 receives the state quantities of the tire 2 and the wheel 3 which are the output signals of the tire side sensor 87 and the wheel side sensor 88, and uses the state quantities for active safety technology of the vehicle, for example.

In the bearing unit 1 of the present embodiment, a signal relating to a traveling speed of the vehicle is received by the wireless communication device 13 (antenna 71) from the calculator 69. Only when the traveling speed is equal to or more than a predetermined value and determined as in a traveling state, electric power is supplied to the tire side sensor 87 and the wheel side sensor 88, and when the traveling speed is less than the predetermined value and determined to be substantially stopped, the supply of electric power is stopped. Unnecessary power consumption of the battery 14 is prevented by performing this power supply control.

According to the bearing unit 1 of the present embodiment having the above-described configuration, it is possible to accurately detect the state quantities of the tire 2 at low cost regardless of an action state of the brake.

That is, in the present embodiment, since the tire side sensor 87 and the wheel side sensor 88 are provided not on a bearing unit 1 side but on a vehicle wheel (tire 2 and wheel 3) side unlike the structure described in Patent Document 4, for example, even when detecting force acting on the tire 2, accurate detection can be performed regardless of an operation state of the disc brake device 4 (an action state of the brake).

In the present embodiment, the electric power generated by the electric generator 12 provided in the bearing unit 1 and stored in the battery 14 can be supplied to the tire side sensor 87 and the wheel side sensor 88. Further, the output signals of the tire side sensor 87 and the wheel side sensor 88 can be wirelessly transmitted from the wireless communication device 13 provided on the bearing unit 1 to the calculator 69 provided at the vehicle body 7 side. Therefore, when the bearing unit 1 is attached to the knuckle 6, handling work of the harness is not necessarily performed, and assembly workability can be improved accordingly.

Even when replacing the tire 2, the electric generator 12, the wireless communication device 13, the battery 14, and the charger 15 provided in the bearing unit 1 can be continuously used as they are (it will be sufficient to replace only the tire side sensor 87 provided in the tire 2). Therefore, the cost at the time of tire replacement can be reduced as compared with the case where the electric generator or the like is provided in the tire.

In the present embodiment, even when tire rotation (change of tire position) is performed to prevent uneven wear, since there is no change in an attachment position of the bearing unit 1 itself having a wireless communication function, a problem in determining from which tire a signal is received by the calculator 69 at the vehicle body 7 side can be prevented.

In the present embodiment, it is possible to realize a concrete support structure capable of positioning the battery 14 in the axial direction and the radial direction with respect to the hub body 22 configuring the bearing unit 1. That is, in the present embodiment, when the battery 14 is accommodated in the battery case 76, in the battery case 76, a part from the base end portion to the intermediate portion of the connection part 78 and the connector part 80 are internally fitted to the inner peripheral surface of the inward flange part 33 which is the radial positioning part and the inner peripheral surface of the positioning cylinder part 40 respectively, and a part of the connector part 80 and the nut 81 screwed with the tip end portion of the connection part 78 are abutted against the axially inner side surface of the inward flange part 33 which is the axial positioning part and the step surface 109 in the axial direction respectively (the step surface 109 and the axially inner side surface of the inward flange part 33 are sandwiched by the part of the connector part 80 and the nut 81 from both sides in the axial direction). Therefore, in the present embodiment, the battery case 76 can be supported and fixed in a state where the battery case 76 is positioned in the axial direction and the radial direction with respect to the hub body 22. Moreover, in the present embodiment, by cutting and grinding the inner peripheral surface (small-diameter portion 31) of the inward flange part 33 and the inner peripheral surface of the positioning cylinder part 40, the coaxiality with respect to the center axis of the hub body 22 thereof is increased, and by cutting and grinding the step surface 109 and the axially inner side surface of the inward flange part 33, the parallelism with respect to the virtual plane thereof is increased. Therefore, in a state where the battery case 76 is supported and fixed to the hub body 22, rattling in the radial direction of the battery case 76 with respect to the hub body 22 can be effectively prevented, and a center axis of the battery case 76 and the center axis of the hub body 22 can be matched. Also, rattling in the axial direction of the battery case 76 with respect to the hub body 22 can be effectively prevented. As described above, in the present embodiment, it is possible to realize a highly practical support structure capable of positioning the battery 14 (battery case 76) in the axial direction and the radial direction with respect to the hub body 22.

### [Second Embodiment]

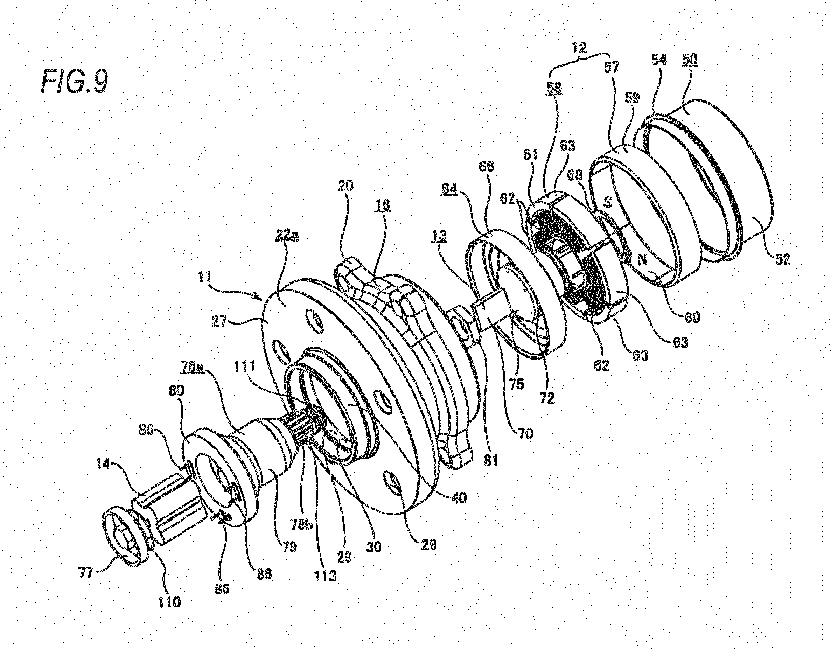

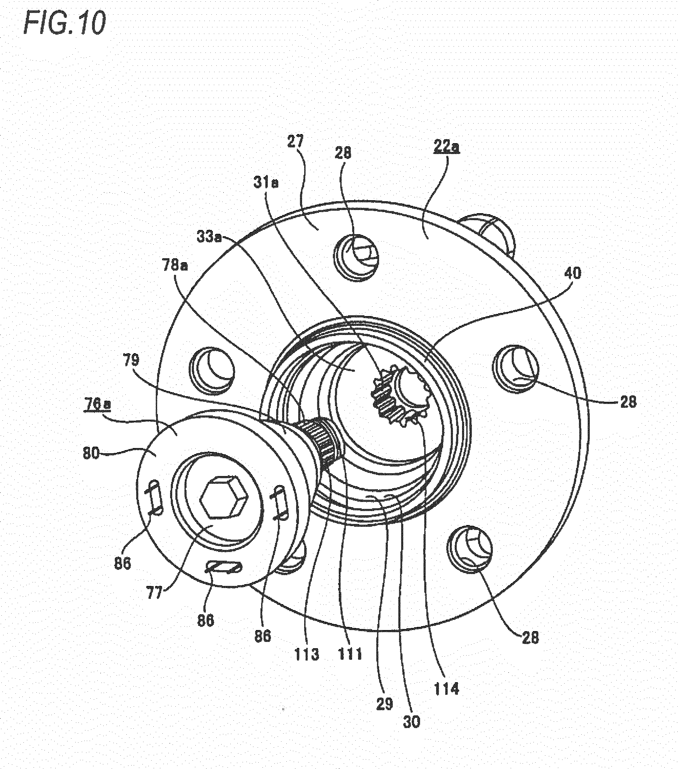

A second embodiment of the present invention will be described with reference to FIGS. 9 and 10. A bearing unit 1a of the present embodiment is characterized in that a rotation restricting mechanism for restricting relative rotation between a battery case 76a and a hub body 22a is provided between the battery case 76a and the hub body 22a. Since other configurations are similar to those in the first embodiment described above, duplicate descriptions will be omitted, and the characterizing part of the present embodiment will be mainly described below.

In the present embodiment, a male serration part (male serration groove) 113 is configured by alternately arranging, in a circumferential direction, a plurality of concave portions and convex portions which are long in an axial direction is formed on an outer peripheral surface of a connection part 78a configuring the battery case 76a at a base end side portion (from an axially outer end portion to an intermediate portion) than a portion where the male screw part 111 is formed. On the other hand, a female serration part (female serration groove) 114 configured by alternately arranging, in the circumferential direction, a plurality of concave portions and convex portions which are long in the axial direction is formed on an inner peripheral surface of an inward flange part 33a (small-diameter portion 31a) which is the radial positioning part and provided on the hub body 22a. The male serration part 113 provided in the battery case 76a and the female serration part 114 provided on the hub body 22a are serration engaged so as to restrict relative rotation between the hub body 22a and the battery case 76a. Incidentally, in the present embodiment, the female serration part 114 corresponds to the rotation restricting part described in claims.

In the present embodiment having the above-described configuration, the work of supporting and fixing the battery case 76a with respect to the hub body 22a can be facilitated. That is, in the case where the rotation restricting mechanism is not provided between the battery case and the hub body as in the first embodiment, it is necessary to grip the battery case so as not to rotate when fastening the nut to the battery case. However, in the present embodiment, since the relative rotation between the battery case 76a and the hub body 22a is restricted, the nut 81 can be easily fastened to the battery case 76a only by not rotating the hub body 22a. Further, in the present embodiment, it is also possible to fasten the nut 81 with the maximum torque which can be withstood by the serration engagement part (rotation restricting mechanism) between the male serration part 113 and the female serration part 114. Incidentally, when implementing the present invention, instead of the rotation restricting mechanism by serration engagement, a rotation restricting mechanism by spline engagement or key engagement can be adopted.

Other configurations and operational effects of the present embodiment are similar to those in the first embodiment.

### [Third Embodiment]

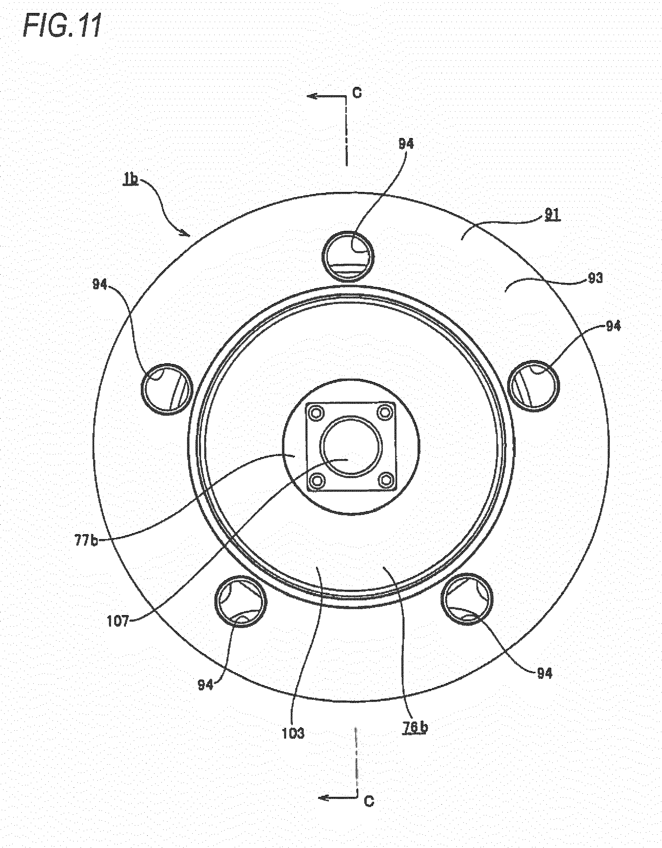

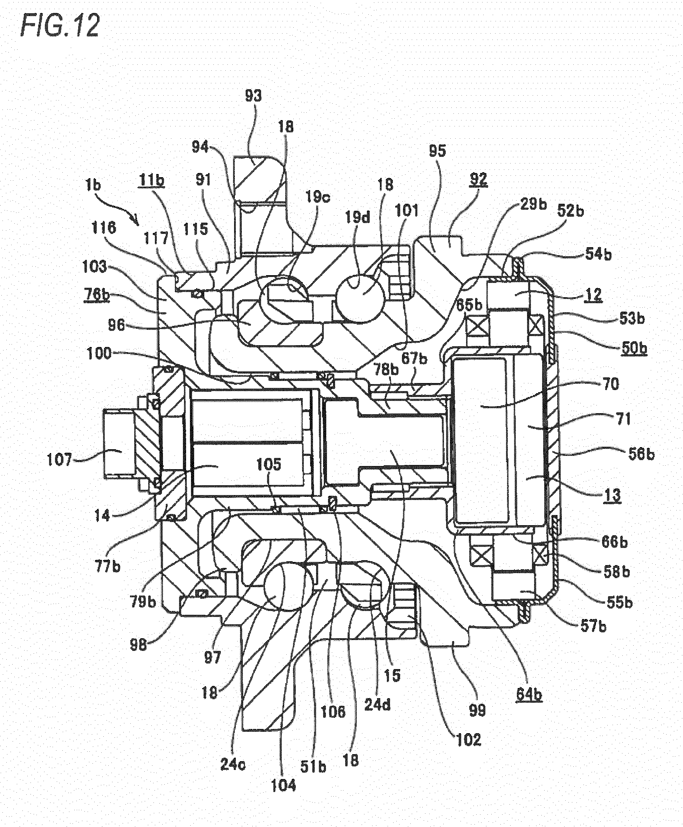

A third embodiment of the present invention will be described with reference to FIGS. 11 and 12. The first and second embodiments described above are directed to an inner ring rotation type structure, while the present embodiment, is directed to an outer ring rotation type structure.

A bearing unit 1b of the present embodiment is also used for a driven wheel, and although not shown, similarly to the case of the first and second embodiments, rotatably supports the tire 2 and the wheel 3 configuring a vehicle wheel, and the brake rotor 5 with respect to the knuckle 6 configuring a suspension device.

The bearing unit 1b includes a bearing part 11b having a bearing function, the electric generator 12 having the power generation function, the wireless communication device 13 having the wireless communication function, the battery 14 having the electric power storage function, and the charger 15 having the charging function.

The bearing part 11b rotatably supports the tire 2 and the wheel 3 with respect to the knuckle 6, and includes a hub (outer ring) 91 which is the outer diameter side bearing ring member and the rotation side bearing ring member, an inner ring assembly 92 which is the inner diameter side bearing ring member and the stationary side bearing ring member, and a plurality of balls 18, 18.

The hub 91 is formed in a substantially annular shape as a whole, and has double-row outer ring raceways 19c, 19d on an inner peripheral surface and a rotation side flange 93 at an axially intermediate portion on an outer peripheral surface. Further, a plurality of coupling holes (screw holes or through holes) 94, 94 penetrating in the axial direction are provided on the rotation side flange 93.

The inner ring assembly 92 is formed by combining an assembly body 95 and an inner ring element 96 in a substantially annular shape as a whole, has double-row inner ring raceways 24c, 24d on an outer peripheral surface, and is supported concentrically with the hub 91 on an inner diameter side of the hub 91. Specifically, the inner ring raceway 24d at an inner side in the axial direction is formed directly at an axially intermediate portion of an outer peripheral surface of the assembly body 95, and the inner ring element 96 formed with the inner ring raceway 24c at an outer side in the axial direction on an outer peripheral surface thereof is externally fitted and fixed to a small-diameter step portion 97 similarly formed at an axially outer end side portion. An axially outer end surface of the inner ring element 96 is pressed by a crimping part 98 formed by plastically deforming an axially outer end portion of the assembly body 95 radially outward. A stationary side flange 99 fixed to the knuckle 6 is provided at a portion on an axially inner end side portion of the assembly body 95 which protrudes axially inward than an axially inner end opening part of the hub 91. Further, coupling holes (screw holes or through holes) penetrating in the axial direction which are not shown are provided on the stationary side flange 99.

Particularly, in the present embodiment, a through hole (center hole) 29b penetrating in the axial direction is provided at a center portion of the assembly body 95. The through hole 29b is configured by a small-diameter portion 100 provided at an axially outer half portion, and a large-diameter portion 101 provided at an axially inner half portion. Further, the small-diameter portion 100 is formed with a constant inner diameter dimension along the axial direction, while the large-diameter portion 101 is formed in a substantially trapezoidal cross section in which an inner diameter dimension gradually increases toward an axially inward direction. Furthermore, in the present embodiment, the battery 14, the charger 15, and a part of the wireless communication device 13 (axially outer end portion) are arranged in the through hole 29b.

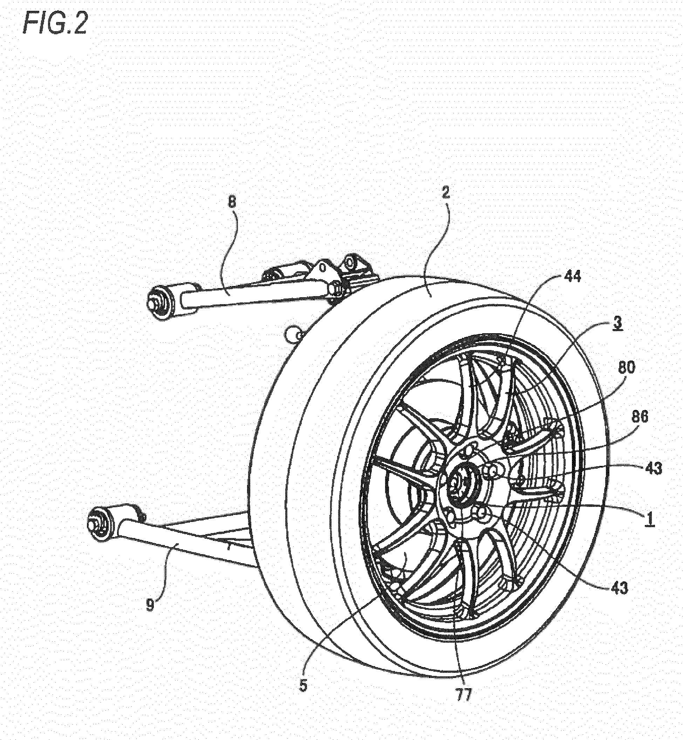

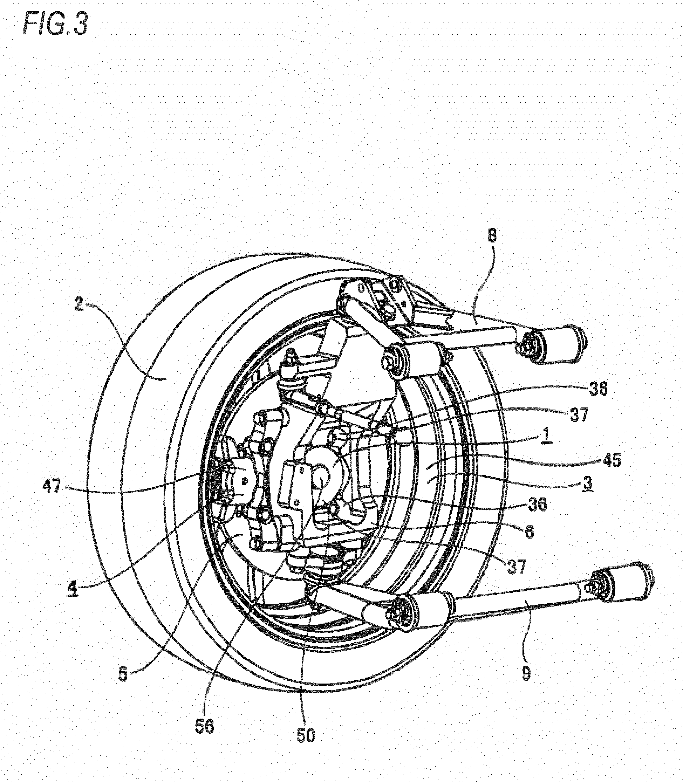

In the bearing unit 1b of the present embodiment, the tire 2 and the wheel 3 are coupled and fixed to the rotation side flange 93 configuring the hub 91. When being assembled to the vehicle, an axially inner end portion of the assembly body 95 configuring the inner ring assembly 92 is inserted into the support hole 35 (referring to FIGS. 2 and 3) configuring the knuckle 6 and the stationary side flange 99 is coupled and fixed to the knuckle 6.

In the bearing unit 1b of the present embodiment, a seal ring 102 is provided between the axially inner end opening part of the hub 91 and an outer peripheral surface of an axially intermediate portion of the assembly body 95, and in the hub 91, a battery case 76b is mounted on an inner peripheral surface (cylindrical surface) of an axially outer end portion which protrudes axially outward than the inner ring assembly 92. Further, a bottomed cylindrical cover 50b is mounted to an axially inner end opening part of the assembly body 95. Thereby, grease sealed in an internal space 51b where the balls 18, 18 are provided is prevented from leaking into an external space, and foreign matters in the external space are prevented from entering the internal space 51b.

Also, in the present embodiment, the cover 50b is configured by a cylindrical shaped cylinder portion 52b and a disk-like bottom portion 53b, in which an axially outer end portion of the cylinder portion 52b is internally fitted and fixed to an inner peripheral surface of an axially inner end portion of the hub 91. Further, an outward collar part (bent part) 54b provided at an axially intermediate portion of the cylinder portion 52b is abutted against an axially inner end surface of the inner ring assembly 92, so that the cover 50b is positioned in the axial direction. Furthermore, the bottom portion 53b is configured by an outer diameter side circular ring portion 55b provided to be bent at a right angle in a radially inward direction from an axially inner end portion of the cylinder portion 52b, and a center circular plate portion 56b provided at a center portion of the bottom portion 53b and at a radially inner side of the outer diameter side circular ring portion 55b. In the present embodiment, the cylinder portion 52b and the outer diameter side circular ring portion 55b are integrally formed by performing press working on a metal plate such as a stainless steel sheet, and the center circular plate portion 56b is formed of resin with excellent radio wave transmissibility.

In the present embodiment, the bearing unit 1b is configured by assembling the electric generator 12, the wireless communication device 13, the battery 14, and the charger 15 to the bearing part 11b having the above-described configuration. Incidentally, since basic functions of the electric generator 12, the wireless communication device 13, the battery 14 and the charger 15 are similar to those in the first embodiment, duplicate descriptions will be omitted or simplified, and the part different from the first embodiment will be mainly described.

The electric generator 12 is a magnet type alternating current electric generator which generates three-phase alternating current, and includes a stator 57b and a rotor 58b concentrically arranged with each other. The stator 57b is coupled and fixed to an inner peripheral surface of the axially outer end portion of the cylinder portion 52b configuring the cover 50b. On the other hand, the rotor 57b is supported and fixed to the axially outer end portion of the hub 91 by using a mounting member 64b having a crank shaped cross section and formed in a substantially annular shape as a whole and the battery case 76b.

Specifically, the mounting member 64b is configured by a circular plate portion 65b, a large-diameter cylinder portion 66b provided to be bent in an axially inner side direction from an outer diameter side end portion of the circular plate portion 65b, and a small-diameter cylinder portion 67b provided to be bent in an axially outer side direction from an inner diameter side end portion of the circular plate portion 65b. The rotor 58b is externally fitted and fixed to the large-diameter cylinder portion 66b in a state where the small-diameter cylinder portion 67b is unrotatably spline engaged with an axially inner end portion (connection part 78b) of the battery case 76b. Incidentally, the mounting member 64b having such a configuration is arranged inside the large-diameter portion 101 configuring the through hole 29b.

In the present embodiment, the stator 57b and the rotor 58b are arranged concentrically in a state where the stator 57b is coupled and fixed to an inner peripheral surface of the cylinder portion 52b configuring the cover 50b, and the rotor 58 is supported and fixed to the hub 91 via the mounting member 64b and the battery case 76b, and an outer peripheral surface of the rotor 58b faces an inner peripheral surface of the stator 57b (permanent magnet) in the radial direction via a minute clearance. By adopting such a configuration, when the rotor 58b rotates together with the hub 91, electromotive force is generated by an electromagnetic induction action of coils configuring the rotor 58b.

The wireless communication device 13 performs wireless communication with the calculator 69 (referring to FIG. 4), and includes the wireless communication circuit (substrate) 70 and the antenna 71. The wireless communication device 13 is arranged (accommodated) in a resin-molded and fixed state at a radially inner side of the large-diameter cylinder portion 66b configuring the mounting member 64b. Specifically, in the wireless communication devices 13, the wireless communication circuit 70 is fixed at an axially outer side and the antenna 71 is fixed at an axially inner side. In the present embodiment, by arranging the antenna 71 in this manner, the antenna 71 is made to adjacently face the resin-made center circular plate portion 56b configuring the cover 50b. Therefore, the wireless communication device 13 is supported and fixed to the hub 91 using the mounting member 64b and the battery case 76b.

The battery 14 stores electric power generated by the electric generator 12, and is configured by connecting a plurality of storage batteries in series. Further, the charger 15 supplies electric power generated by the electric generator 12 to the battery 14 and charges the battery 14, and includes a rectifier circuit, a charge/discharge control circuit, and a voltage control circuit. In the present embodiment, in a state of being electrically connected, the battery 14 and the charger 15 having such a configuration are accommodated in the battery case 76b having openings on both sides in the axial direction and covered by a cap 77 from an axially outer side direction.

The battery case 76b is entirely formed of synthetic resin, and includes a small-diameter cylindrical connection part 78b provided at the axially inner end portion, a large-diameter cylindrical accommodation part 79b provided from an axially intermediate portion to an outer end portion, and a circular ring shaped attachment flange part 103 provided on an outer peripheral surface of an axially outer end portion of the accommodation part 79b. Further, in the battery case 76b, when the accommodation part 79b and the connection part 78b are arranged at a radially inner side of the assembly body 95, the attachment flange part 103 provided at a portion protrudes from an axially outer end side opening part of the assembly body 95 in the axial direction is internally fitted and fixed to an inner peripheral surface of the axially outer end portion of the hub 91 in a sealed state. Particularly, in the present embodiment, the attachment flange part 103 is configured by continuing a small-diameter portion 115 at an axially inner half portion and a large-diameter portion 116 at an axially outer half portion with an abutting step surface 117. Further, the small-diameter portion 115 is pressed into (or internally fitted and fixed into by clearance fitting) the inner peripheral surface of the axially outer end portion of the hub 91 which corresponds to the radial positioning part described in the claims, and the abutting step surface 117 is abutted, in the axial direction, against an axially outer end surface of the hub 91 which corresponds to the axial positioning part described in the claims. Furthermore, a radial needle bearing 104 is arranged between an outer peripheral surface of the accommodation part 79b and the small-diameter portion 100 configuring the through hole 29b, so as to prevent the battery case 76b rotating together with the hub 91 from swinging, and to ensure concentricity between the battery case 76b and the inner ring assembly 92. In the present embodiment, in order to prevent displacement of the radial needle bearing 104 in the axial direction, a step surface 105 directed inward in the axial direction is formed at an axially intermediate portion of the outer peripheral surface of the accommodation part 79b, and a retaining ring 106 is locked with a portion of the outer peripheral surface of the accommodation part 79b axially inward than a surface configuring an inner ring raceway of the radial needle bearing 103. The battery case 76a of the present embodiment having such a configuration is also inserted into the through hole 29b of the assembly body 95 from the outer side to the inner side in the axial direction, and the attachment flange part 103 is supported and fixed to the hub 91 in a state where the connection part 78b provided at an axially inner end portion is spline engaged with the mounting member 64b. As a result, the battery case 76b is supported and fixed in a state where the battery case 76b is positioned in the axial direction and the radial direction with respect to the hub 91.

In a state where the battery case 76b is supported and fixed as described above, the charger 15 provided inside the connection part 78b is connected to a cable (not shown) drawn out from the electric generator 12 to the inside of the large-diameter cylinder portion 66b of the mounting member 64b. Further, a signal line connected to the wireless communication device 13 arranged in the large-diameter cylinder portion 66b is electrically connected to the cap 77b through the inside of the connection part 78b and the accommodation part 79b.

In the present embodiment, a sensor connector 107 used to connect wiring (89a, 89c) for connecting one or more sensors (sensors 87, 88 on the tire side and the wheel side respectively) provided on the vehicle wheel is provided at an axially outer end portion of the cap 77b. Such a connector 107 is provided at a portion located axially outermost in the bearing unit 1b, and as shown in FIG. 4, when being coupled and fixed to the wheel 3, the connector 107 is located in the wheel center hole 39 (center portion).

Also, in the present embodiment, from the viewpoint of reducing the cost at the time of tire replacement, as shown in FIG. 4, among the sensors for measuring a state quantity of the tire 2, only the tire side sensor 87 for measuring a state quantity which cannot be measured unless the sensor is provided in the tire 2 directly such as a wear sensor, a tire distortion sensor and a temperature sensor is provided in the tire 2 directly. On the other hand, the wheel side sensor 88 for measuring a state quantity which can be measured without providing the sensor in the tire 2 such as an air pressure sensor, a wheel distortion sensor and an acceleration sensor is provided on the wheel 3 (at the rim part 45 in the illustrated example). Then, the wheel side sensor 88 and the connector 107 are connected by the wiring 89a arranged along an axially inner side surface of the disc part 44 configuring the wheel 3, and a connector provided at an end portion of the wiring 89a. On the other hand, the tire side sensor 87 is connected via a relay connector 90 attached to the wheel 3 (rim part 45).

In the bearing unit 1b of the present embodiment having the above-described configuration, when the vehicle wheel (tire 2 and wheel 3) rotates with the traveling of the vehicle, the hub 91, which is the rotation side bearing ring member, of the bearing part 11b rotates. Then, the rotor 58b supported and fixed to the axially outer end portion of the hub 91 via the battery case 76b and the mounting member 64b rotates relatively to the stator 57b supported and fixed to the inner ring assembly 92 which is the stationary side bearing ring member. As a result, the electric generator 12 configured by the stator 57b and the rotor 58b generates electric power. Then, the AC voltage generated by the electric generator 12 is transmitted to the charger 15 in the battery case 76b through a cable (not shown) or the like. Then, after being converted into DC voltage by the charger 15, the voltage is supplied to the battery 14. The electric power stored in the battery 14 is supplied to the tire side sensor 87 provided in the tire 2 and the wheel side sensor 88 provided in the wheel 3 through the connector 107 and the wiring 89a to 89c. As a result, the tire side sensor 87 and the wheel side sensor 88 detect state quantities of the tire 2 and the wheel 3.

Then, the output signals of the tire side sensor 87 and the wheel side sensor 88 are transmitted to the connector 107 through the wiring 89a to 89c, and then transmitted to the wireless communication device 13 through a signal wire not shown. Then, the output signals of the tire side sensor 87 and the wheel side sensor 88 are wirelessly transmitted by the antenna 71 configuring the wireless communication device 13 through the center circular plate portion 56b of the cover 50b to the calculator 69 arranged at the vehicle body 7 side. As a result, the calculator 69 receives the state quantities of the tire 2 which are the output signals of the tire side sensor 87 and the wheel side sensor 88, and uses the state quantities for active safety technology of the vehicle, for example.

Other configurations and operational effects of the present embodiment are similar to those in the first embodiment.

### [Fourth Embodiment]

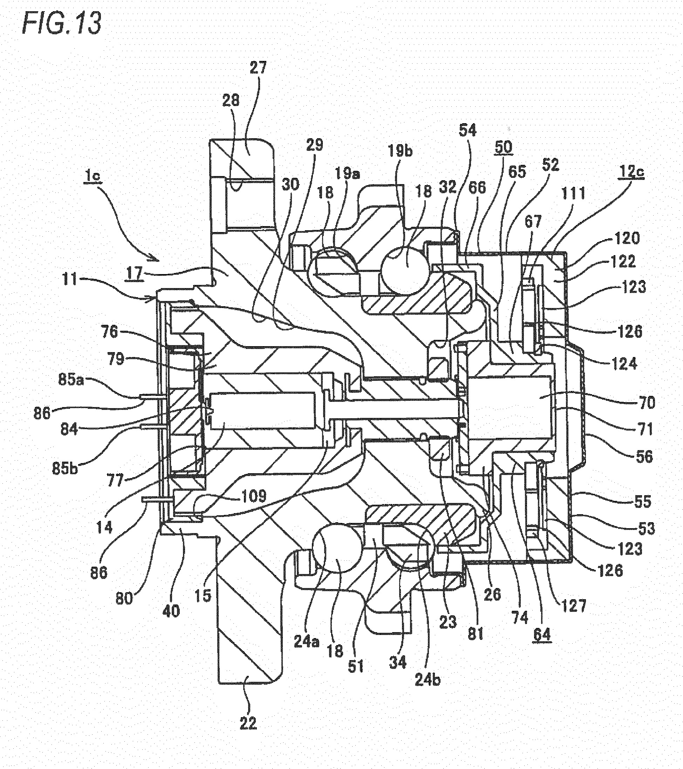

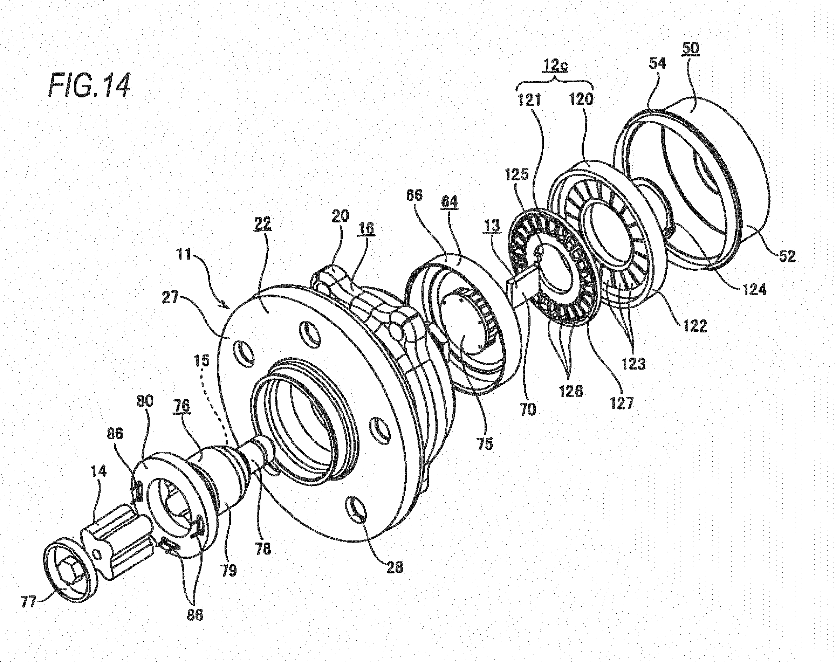

A fourth embodiment of the present invention will be described with reference to FIGS. 13 and 14. A bearing unit 1c of the present embodiment is characterized in that an axial gap type single-phase electric generator with a coreless structure is used as an electric generator 12c. Since other configurations are basically the same as those in the first embodiment described above, duplicate descriptions will be omitted, and the characterizing part of the present embodiment will be mainly described.

The electric generator 12c used in the present embodiment is arranged in a bottomed cylindrical cover 50c which closes the axially inner end opening part of the outer ring 16, and includes a stator 120 and a rotor 121 which are arranged concentrically (coaxially) with each other. In the present embodiment, the stator 120 and the rotor 121 are each formed in a substantially circular ring shape, and are arranged in a state of being adjacent to each other in the axial direction. An air gap (axial gap) is provided between the stator 120 and the rotor 121 separately. In other words, the stator 120 and the rotor 121 are arranged to face each other via an axial air gap.

The stator 120 includes a back yoke 122 formed of an iron-based material and having a substantially circular ring plate shape, and a plurality of permanent magnets 123, 123. Each of the permanent magnets 123 and 123 is formed in a fan shape and is supported at equal intervals in the circumferential direction on an axial one side surface (outer side surface) of the back yoke 122 facing the rotor 121 in the axial direction. Further, in the present embodiment, the permanent magnets 123 and 123 are magnetized in the axial direction, and magnetization directions are different between the circumferentially adjacent permanent magnets 123 and 123. Therefore, S poles and N poles are alternately arranged at equal intervals on the axial one side surface of the back yoke 122. Furthermore, in the present embodiment, an outer peripheral surface of the stator 120 (back yoke 122) having such a configuration is internally fitted and fixed to (pressed into) an inner peripheral surface of the cylinder portion 52 configuring the cover 50 so as to be supported and fixed to the cover 50.

The rotor 121 is configured by arranging the same number of coils 126, 126 as the permanent magnets 123, 123 of the stator 120 at equal intervals in the circumferential direction. In the present embodiment, each of the coils 126, 126 is supported (for example, embedding support, adhesion support) by an circular ring shaped support plate 127 formed of a non-magnetic material. Further, each of the coils 126, 126 is formed in a substantially fan shape (hollow fan shape), and a center axis thereof is arranged in parallel with a center axis of the hub 17. In the present embodiment, the inside of the coils 126, 126 is hollow (without arranging an iron core or a core), and the electric generator 12c has a coreless structure. In the present embodiment, the rotor 121 having such a configuration is supported and fixed to the axially inner end portion of the hub 17 by using a retaining ring 124 and the mounting member 64 having a crank shaped cross section and externally fitted and fixed to an axially inner end portion of the inner ring 23. Specifically, the mounting member 64 is configured by a circular plate portion 65, a large-diameter cylinder portion 66 provided in a state of being bent in an axially outer side direction from an outer diameter side end portion of the circular plate portion 65, and a small-diameter cylinder portion 67 provided in a state of being bent in an axially inner side direction from an inner diameter side end portion of the circular plate portion 65. The rotor 121 is externally fitted and fixed to the small-diameter cylinder portion 67 in a state where the large-diameter cylinder portion 66 is externally fitted and fixed to an axially inner end portion (shoulder portion) of the inner ring 23 configuring the hub 17 by interference fit. Incidentally, as a method of fixing the mounting member 64 to the hub 17, for example, crimping fixing or adhesive fixing can be adopted. In addition, a substantially C-shaped retaining ring 124 is locked with a portion of the small-diameter cylinder portion 67 protruding axially inward from a portion where the rotor 121 is externally fitted, so as to prevent the rotor 121 from falling off from the mounting member 64 in the axial direction. In the present invention, in order to position the rotor 121 in the circumferential direction (rotational direction), a claw part (engaging convex portion) 125 provided on an inner peripheral surface of the rotor 121 is locked to the small-diameter cylinder portion 67. In this state, air gaps are provided between the coils 126, 126 and the permanent magnets 123, 123 configuring the stator 120 respectively.

In the present embodiment having the above-described configuration, facing areas of the permanent magnets 123, 123 and the coils 126, 126 can be made larger easily as compared with the case of the radial gap type electric generator 12 (referring to FIG. 4) used in the first embodiment when installation spaces are the same. Therefore, it is possible to secure a large change rate of magnetic flux passing through the coils 126, 126, and to increase the induced electromotive force. As a result, the electric generator 12c used in the present embodiment can be reduced in size and weight as compared with the radial gap type electric generator 12 used in the first embodiment.

The electric generator 12c used in the present embodiment has a coreless structure in which the coils 126, 126 are not provided with an iron core (core) therein, so that the occurrence of cogging torque can be prevented. Therefore, according to the bearing unit 1c of the present embodiment, vibration and noise during rotation of the hub 17 can be reduced. Further, since the electric generator 12c is a single-phase electric generator in which a number (a number of poles) of the permanent magnets 123, 123 configuring the stator 120 and a number of the coils 126, 126 configuring the rotor 121 are made to coincide with each other, the rectifier circuit can be simplified as compared with a case of using the three-phase electric generator 12 which is used in the first embodiment. Therefore, it is also favorable from the viewpoint of reducing the product cost of the bearing unit 1c.

Incidentally, when implementing the present invention, for example, a structure in which a plurality of stators having the configuration as used in the present embodiment are provided to sandwich a rotor from both sides in the axial direction can also be adopted. Specifically, in a state where a pair of stators are arranged to sandwich the rotor from both sides in the axial direction, an outer side cylinder portion provided on one of the two stators is externally fitted and fixed to an inner side cylinder portion provided on the other stator. Then, the two stators are combined in a state of having an air gap (radial gap) with the rotor separately. In this way, in a state in which a pair of stators are combined, an N pole (or S pole) of a permanent magnet configuring an axially inner side (cover side) stator and an S pole (or N pole) of a permanent magnet configuring an axially outer side (hub side) stator are facing to each other in the axial direction. By adopting such a configuration, magnetic flux density can be increased as compared with a case where only one stator is used, and as a result, a power generation amount can be increased.

Other configurations and operational effects of the present embodiment are similar to those in the first embodiment.

### Industrial Applicability

In the embodiments described above, the case where the diameters and the pitch circle diameters of balls in both rows are equal to each other has been described. However, for example, a case where the diameter of the balls configuring the ball row on the inner side (axially inner side) is larger than that of the balls configuring the ball row on the outer side (axially outer side), and the pitch circle diameter of the ball row on the outer side is larger than that of the ball row on the inner side can also be adopted. It is also possible to secure a larger volume of a space of the outer end side large-diameter portion (increase a capacity of a battery to be stored therein) by adopting such a configuration. Incidentally, electric power generated by the electric generator is rectified by the full-wave rectification circuit configuring the charger and supplied to the sensor or the like, and the electric power is supplied to the battery via the charger. When a power generation amount of the electric generator is insufficient to operate the sensor or the like, electric power is supplied from the battery to the sensor or the like. In addition, when the power generation amount of the electric generator is sufficient to operate the sensor or the like, the battery can be charged according to a request of the charger. Further, the present invention can be applied not only to a bearing unit for a driven wheel, but also to a bearing unit for a driving wheel. Furthermore, the structures of the above-described embodiments can be implemented in combination as appropriate.

This application is based on Japanese Patent Application No. 2015-186307 filed on September 24, 2015, Japanese Patent Application No. 2016-003297 filed on January 12, 2016, and Japanese Patent Application No. 2016-010636 filed on January 22, 2016, the contents of which are incorporated herein by reference.

### Description of Reference Numerals

1, 1a, 1b, 1c vehicle wheel supporting rolling bearing unit
2 tire
3 wheel
4 disc brake device
5 brake rotor
6 knuckle
7 vehicle body
8 upper arm
9 lower arm
11, 11b bearing part
12, 12b electric generator
13 wireless communication device
14 battery
15 charger
16 outer ring
17 hub
18 ball
19a-19d outer ring raceway
20 stationary side flange
21 attachment hole
22, 22a hub body
23 inner ring
24a-24d inner ring raceway
25 small-diameter step portion
26 crimping part
27 rotation side flange
28 coupling hole
29, 29b through hole (center hole)
30 outer end side large-diameter portion
31 small-diameter portion
32 inner end side large-diameter portion
33 inward flange part
34 cage
35 support hole
36 knuckle side attachment hole
37 coupling member
38 rotor center hole
39 wheel center hole
40 positioning cylinder part
41 wheel coupling hole
42 rotor coupling hole
43 coupling member
44 disc part
45 rim part
46 hat part
47 caliper
48 sliding part
49 seal ring
50, 50b, 50c cover
51, 51b internal space
52, 52b cylinder portion
53, 53b bottom portion
54, 54b outward collar part
55, 55b outer diameter side circular ring portion
56, 56b center circular plate portion
57, 57b stator
58, 58b rotor
59 support ring
60 permanent magnet
61 stator core
62 coil
63 disk
64, 64b mounting member
65, 65b circular plate portion
66, 66b large-diameter cylinder portion
67, 67b small-diameter cylinder portion
68 retaining ring
69 calculator
70 wireless communication circuit
71 antenna
72 case
73 small-diameter portion
74 large-diameter portion
75 relay substrate
76, 76a, 76b battery case
77, 77b cap
78, 78b, 78c connection part
79, 79b accommodation part
80 connector part
81 nut
82 stopper part
83 terminal
84 terminal
85a, 85b pin
86 sensor connector
87 tire side sensor
88 wheel side sensor
89a-89c wiring
90 relay connector
91 hub
92 inner ring assembly
93 rotation side flange
94 coupling hole
95 assembly body
96 inner ring element
97 small-diameter step portion
98 crimping part
99 stationary side flange
100 small-diameter portion
101 large-diameter portion
102 seal ring
103 attachment flange part
104 radial needle bearing
105 step surface
106 retaining ring
107 sensor connector
108 female connector
109 step surface
110 seal ring
111 male screw part
112 step surface
113 male serration part
114 female serration part
115 small-diameter portion
116 large-diameter portion
117 abutting step surface
120 stator
121 rotor
122 back yoke
123 permanent magnet
124 retaining ring
125 claw part
126 coil
127 support plate

## Claims

1. A vehicle wheel supporting rolling bearing unit comprising:
a bearing part including an outer diameter side bearing ring member having an outer ring raceway on an inner peripheral surface, an inner diameter side bearing ring member having an inner ring raceway on an outer peripheral surface, and a plurality of rolling elements rollably provided between the outer ring raceway and the inner ring raceway, wherein one of the outer diameter side bearing ring member and the inner diameter side bearing ring member is a stationary side bearing ring member which is supported and fixed to a suspension device and non-rotatable in a use state, and the other bearing ring member is a rotation side bearing ring member which is coupled and fixed to a vehicle wheel and is configured to rotate together with the vehicle wheel;
an electric generator including a stator and a rotor concentrically arranged with each other, and configured to generate electric power to be supplied to a sensor provided on the vehicle wheel based on relative rotation between the stator and the rotor;
a battery configured to store the electric power generated by the electric generator; and
a wireless communication device configured to wirelessly communicate a signal including an output signal of the sensor with an electronic equipment arranged on a vehicle body side,
wherein the stator is supported and fixed to the stationary side bearing ring member, and the rotor, the battery and the wireless communication device are supported and fixed to the rotation side bearing ring member.

2. The vehicle wheel supporting rolling bearing unit according to claim 1, further comprising:
a sensor connector configured to be used for electrically connecting with the sensor, the sensor connector being arranged at a portion which is inserted into a center hole of a wheel configuring the vehicle wheel in a state where the wheel is coupled and fixed to the rotation side bearing ring member.

3. The vehicle wheel supporting rolling bearing unit according to claim 1 or 2,
wherein an axially inner end opening part of the stationary side bearing ring member is closed by a cover, and a portion of the cover which faces an antenna configuring the wireless communication device is formed of radio wave transmissive resin.

4. The vehicle wheel supporting rolling bearing unit according to any one of claims 1 or 3,
wherein the electric generator includes a stator and a rotor each having a substantially circular ring shape, and the stator and the rotor are arranged to face each other via an axial air gap.

5. The vehicle wheel supporting rolling bearing unit according to any one of claims 1 or 4, further comprising:
a charger which is configured to supply the electric power generated by the electric generator to the battery to charge the battery.

6. The vehicle wheel supporting rolling bearing unit according to any one of claims 1 or 5,
wherein a through hole is formed at a center portion of the inner diameter side bearing ring member, and at least one of the electric generator, the battery and the wireless communication device is arranged in the through hole.

7. The vehicle wheel supporting rolling bearing unit according to any one of claims 1 or 6,
wherein an axial positioning part configured to position the battery in an axial direction and an radial positioning part configured to position the battery in a radial direction are provided on the rotation side bearing ring member separately, and
wherein the battery is supported and fixed in a state where the battery is positioned in the axial direction and the radial direction with respect to the rotation side bearing ring member.

8. The vehicle wheel supporting rolling bearing unit according to claim 7,
wherein an inward flange part is provided on an inner peripheral surface of the rotation side bearing ring member to protrude inward in the radial direction, and
wherein an axial side surface of the inward flange part functions as the axial positioning part, and an inner peripheral surface thereof functions as the radial positioning part.

9. The vehicle wheel supporting rolling bearing unit according to claim 8,
wherein a rotation restricting part is provided on the inner peripheral surface of the inward flange part to restrict relative rotation with the battery.
